# EUROPÄISCHE PATENTANMELDUNG

(11) **EP 4 328 093 A1**
(43) Veröffentlichungstag der Anmeldung: **28.02.2024**
(21) Anmeldenummer: 23192523.1
(22) Anmeldetag: 21.08.2023
(51) Int. Cl.: B60R 15/00

(54) **FREIZEITFAHRZEUG SOWIE EINRICHTUNG UND ABDICHTUNG FÜR EIN FREIZEITFAHRZEUG**

(30) Priorität: 21.08.2022 DE 102022121097
(71) Anmelder: Hymer GmbH & Co. KG, 88339 Bad Waldsee (DE)
(72) Erfinder: Steigmiller, Anton, 88444 Ummendorf (DE)
(74) Vertreter: Müller Schupfner & Partner Patent- und Rechtsanwaltspartnerschaft mbB

(57) **Zusammenfassung**

Abdichtung (15), insbesondere Eck- oder Rahmenverbindung (15), für eine Einrichtung (2, 3), insbesondere eine Nasszelle (2) oder eine Dusche (3), eines Freizeitfahrzeugs (1), insbesondere eines Wohnmobils oder eines Wohnwagens, zwischen einem ersten Element (16) der Einrichtung (2, 3) und einem zweiten Element (17) der Einrichtung (2, 3). Vorgeschlagen wird, dass zumindest ein elastisches Dichtprofil (18) vorgesehen ist, das zwischen dem ersten Element (16) und dem zweiten Element (17) angeordnet ist, und dass das elastische Dichtprofil (18) zumindest teilweise, insbesondere zumindest im Wesentlichen, durch Einklemmen des elastischen Dichtprofils (18) zwischen dem ersten Element (16) und dem zweiten Element (17) in seiner Position gehalten ist. Ferner sind eine Einrichtung (2, 3) und ein Freizeitfahrzeug (1) angegeben.

## Beschreibung

Die Erfindung betrifft ein Freizeitfahrzeug, insbesondere ein Wohnmobil oder einen Wohnwagen, sowie eine Einrichtung des Freizeitfahrzeugs, insbesondere eine Nasszelle oder eine Dusche, und eine Abdichtung für solch eine Einrichtung.

Aus der DE 295 03 469 U1 ist eine kompakte Nasszelle für ein Wohnmobil bekannt. Die bekannte Nasszelle enthält im Wesentlichen drei Elemente, nämlich eine Dusche mit einer zugeordneten Duschabtrennung, ein vor der Dusche und außerhalb der Duschabtrennung angeordnetes Waschbecken und einen ebenfalls vor der Dusche und außerhalb der Duschabtrennung angeordneten Toilettensitz. Ferner sind Seitenwände vorgesehen.

In herkömmlichen Duschen und Sanitärzellen von Campingfahrzeugen können Seitenwände zueinander auf geeignete Weise abgedichtet werden. Hierbei ist es denkbar, dass wasserbeständige Seitenteile miteinander verschraubt werden, wobei eine geeignete Dichtung durch das Zusammenschrauben komprimiert wird, um eine Dichtwirkung zu erzielen. Nicht wasserbeständige Seitenwände können auf der Innenseite mit wasserbeständigen Kunststoffplatten verkleidet und mit Dichtprofilen oder pastösen Dichtstoffen, insbesondere Silikon, abgedichtet werden.

Neben winklig aufeinander stoßenden Seitenwänden kann eine Abdichtung auch zwischen Rahmenelementen und Füllungen ausgebildet werden. Neben pastösen Dichtstoffen können aufgeklebte Dichtleisten und aufgeschraubte Dichtprofile zum Einsatz kommen.

Gerade bei einem Freizeitfahrzeug, wie einem Wohnmobil oder einem Wohnwagen, ist eine gewichtsreduzierte Auslegung besonders wesentlich. Herkömmliche Ausgestaltungen zum Abdichten einer Nasszelle sind aufwändig, führen bei Prozessunschärfe zu Undichtigkeiten und haben in der Summe ein hohes Gewicht.

Ferner sind herkömmliche Ausgestaltungen aufwändig in der Herstellung. Beispielsweise erfordern pastöse Dichtstoffe ein Vorreinigen der Kontaktflächen mit lösemittelhaltigen Reinigern. Somit besteht insbesondere bei der Montage das Problem einer möglichen Gesundheitsgefährdung und einer Schädigung der Umwelt. Ferner ist die Herstellung aufwändig, da die Qualität der Dichtfuge von der Qualifizierung und der Motivation des ausführenden Mitarbeiters abhängig ist.

Außerdem ergibt sich bei pastösen Dichtstoffen das Problem der Dauerhaltbarkeit, da Dichtfugen aus pastösen Dichtstoffen Wartungsfugen sind und regelmäßig erneuert werden müssen. Im Freizeitfahrzeug sind die Dichtfugen außerdem insbesondere durch Erschütterungen hohen Belastungen ausgesetzt, was die Dauerhaltbarkeit der Abdichtung negativ beeinflusst.

Der vorliegenden Erfindung liegt die Aufgabe zugrunde, eine Abdichtung für eine Einrichtung eines Freizeitfahrzeug, insbesondere eines Wohnmobils oder eines Wohnwagens, eine Einrichtung mit zumindest einer solchen Abdichtung und ein Freizeitfahrzeug mit solch einer Einrichtung anzugeben, die in verbesserter Weise ausgestaltet sind. Insbesondere ist es eine Aufgabe der Erfindung, solch eine Abdichtung, solch eine Einrichtung und solch ein Freizeitfahrzeug anzugeben, bei denen ein oder mehrere der oben aufgeführten Nachteile und Probleme einer herkömmlichen Ausgestaltung zumindest teilweise gelöst sind.

Diese Aufgabe wird durch eine Abdichtung mit den Merkmalen des unabhängigen Patentanspruchs 1, eine Einrichtung mit den Merkmalen des Patentanspruchs 9 und ein Freizeitfahrzeug mit den Merkmalen des Patentanspruchs 10 gelöst.

Die Aufgabe wird durch eine Abdichtung, insbesondere Eck- oder Rahmenverbindung, für eine Einrichtung, insbesondere eine Nasszelle oder eine Dusche, eines Freizeitfahrzeugs, insbesondere eines Wohnmobils oder eines Wohnwagens, zwischen einem ersten Element der Einrichtung und einem zweiten Element der Einrichtung gelöst, wobei zumindest ein elastisches Dichtprofil vorgesehen ist, das zwischen dem ersten Element und dem zweiten Element angeordnet ist, und wobei das elastische Dichtprofil zumindest teilweise, insbesondere zumindest im Wesentlichen, durch Einklemmen des elastischen Dichtprofils zwischen dem ersten Element und dem zweiten Element in seiner Position gehalten ist.

Die Aufgabe wird ferner durch eine Einrichtung, insbesondere eine Nasszelle oder eine Dusche, für ein Freizeitfahrzeug, insbesondere für ein Wohnmobil oder einen Wohnwagen, mit zumindest einer solchen Abdichtung, die zwischen einem ersten Element der Einrichtung und einem zweiten Element der Einrichtung vorgesehen ist, gelöst.

Die Aufgabe wird auch durch ein Freizeitfahrzeug, insbesondere Wohnmobil oder Wohnwagen, mit zumindest einer Einrichtung, insbesondere einer Nasszelle oder Dusche, die ein erstes Element und zumindest eine zweites Element aufweist, gelöst, wobei zumindest eine solche Abdichtung zwischen dem ersten Element und dem zweiten Element vorgesehen ist.

Vorteilhaft ist es, dass zwischen dem elastischen Dichtprofil und dem ersten Element ein Formschluss in zumindest einer Richtung gebildet ist. Dadurch kann das Dichtprofil in verbesserter Weise in seiner Montageposition gehalten werden.

Vorteilhaft ist es, dass das elastische Dichtprofil teilweise in eine Aufnahme des ersten Elements eingesetzt ist und/oder dass das erste Element teilweise in zumindest eine Ausnehmung des Dichtprofils eingreift. Dadurch sind vorteilhafte Möglichkeiten angegeben, um das Dichtprofil in seiner Montageposition zu halten.

Vorteilhaft ist es, dass das zweite Element zumindest im Bereich des Dichtprofis eine Anlagefläche aufweist, an der das Dichtprofil anliegt. Hierdurch kann eine einfache Montage ermöglicht werden.

Vorteilhaft ist es, dass die Anlagefläche des zweiten Elements eine zumindest im Wesentlichen glatte Anlagefläche ist und/oder dass die Anlagefläche des zweiten Elements eine zumindest im Wesentlichen ebene Anlagefläche ist. Hierdurch kann eine zuverlässige Abdichtung realisiert werden. Außerdem kann ein Toleranzausgleich bei der Montage, aber auch im montierten Zustand zum Beispiel in Bezug auf Erschütterungen und dauerhafte Bauteilbewegungen gewährleistet werden.

Vorteilhaft ist es, dass das erste Element ein Rahmenelement ist oder dass das erste Element ein Wandelement, insbesondere eine Wand, weiter insbesondere eine Seitenwand, der Einrichtung ist. Hierdurch kann die Abdichtung bei diesen besonders bevorzugten Anwendungsfällen zum Einsatz kommen.

Vorteilhaft ist es, dass das zweite Element ein Flächenfüllung ist oder dass das zweite Element ein Wandelement, insbesondere eine Wand, weiter insbesondere eine Seitenwand, der Einrichtung ist. Hierdurch kann die Abdichtung bei diesen besonders bevorzugten Anwendungsfällen zum Einsatz kommen.

Vorteilhaft ist es, dass das Dichtprofil zumindest eine Dichtlippe aufweist, die an dem zweiten Element anliegt, und dass die Dichtlippe durch das Einklemmen des Dichtprofis zwischen das erste Element und das zweite Element elastisch verformt ist. Hierdurch wird eine zuverlässige Dichtung erzielt. Hierbei kann unter anderem ein Toleranzausgleich realisiert werden. Ferner kann eine lange Dauerhaltbarkeit erzielt werden.

Je nach Ausgestaltung können ein oder mehrere der folgenden Vorteile realisiert werden. Es können alterungsbeständige, elastische Dichtprofile zum Einsatz kommen. Diese können bei der Montage lediglich gesteckt und/oder eingeklemmt werden.

Ein Reinigen von Kontaktflächen mit lösemittelhaltigen Reinigern ist nicht notwendigerweise erforderlich. Ein Versagen der Abdichtung beziehungsweise der Dichtfuge durch Erschütterung im Fahrbetrieb kann verhindert werden. Außerdem kann eine vereinfachte Montage ermöglicht werden. Die Abdichtung kann gegebenenfalls prozesssicher durch angelernte Mitarbeiter montiert werden.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug entsprechend einem Ausführungsbeispiel in einer schematischen Grundrissdarstellung, wobei zur Vereinfachung der Darstellung im Grundriss eine Nasszelle mit einer Dusche schematisch dargestellt sind;
- Fig. 2: eine schematische, geschnittene Prinzipdarstellung einer Abdichtung für das in Fig. 1 gezeigte Freizeitfahrzeug entsprechend einer möglichen Ausgestaltung, wobei ein erstes Element und ein zweites Element und ein dazwischen angeordnetes Dichtprofil dargestellt sind;
- Fig. 3: eine mögliche Ausgestaltung einer Abdichtung für das in Fig. 1 gezeigte Freizeitfahrzeug, wobei das erste Element als Rahmenelement ausgebildet ist und wobei das zweite Element eine Flächenfüllung ist; und
- Fig. 4: eine mögliche Ausgestaltung einer Abdichtung für das in Fig. 1 gezeigte Freizeitfahrzeug, wobei das erste Element als Wandelement ausgebildet ist und wobei das zweite Element als Wandelement ausgebildet ist.

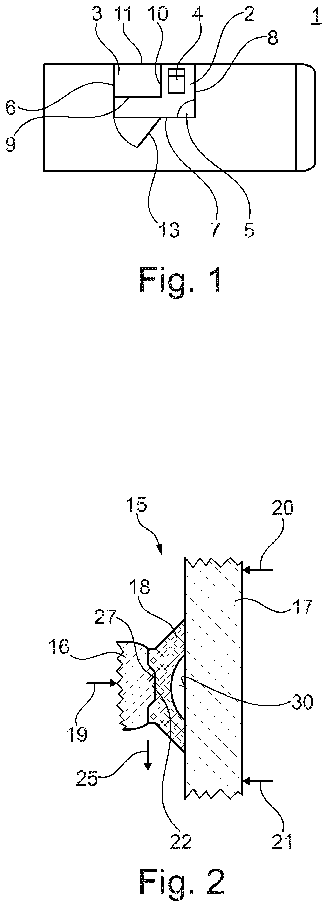

Fig. 1 zeigt ein Freizeitfahrzeug 1 entsprechend einem Ausführungsbeispiel in einer schematischen Grundrissdarstellung. Das Freizeitfahrzeug 1 kann insbesondere als Wohnmobil oder Wohnwagen ausgebildet sein. Das Freizeitfahrzeug 1 umfasst Einrichtungen 2, 3. In diesem Ausführungsbeispiel ist die Einrichtung 3 Teil der Einrichtung 2. Die Einrichtung 2 ist in diesem Ausführungsbeispiel eine Nasszelle 2. Die Einrichtung 3 ist in diesem Ausführungsbeispiel eine Dusche 3 der Nasszelle 2.

Zur Vereinfachung der Darstellung ist im Grundriss nur die Nasszelle 2 mit der Dusche 3 dargestellt. Die Nasszelle 2 weist neben der Dusche 3 noch ein WC 4 und ein Waschbecken 5 auf. Ferner sind Seitenwände 6 bis 11 der Nasszelle 2 gezeigt. Die Seitenwände 6, 9, 10, 11 sind auch Seitenwände 6, 9, 10, 11 der Dusche 3. Der Zugang zur Nasszelle 2 ist über eine Tür 13 möglich.

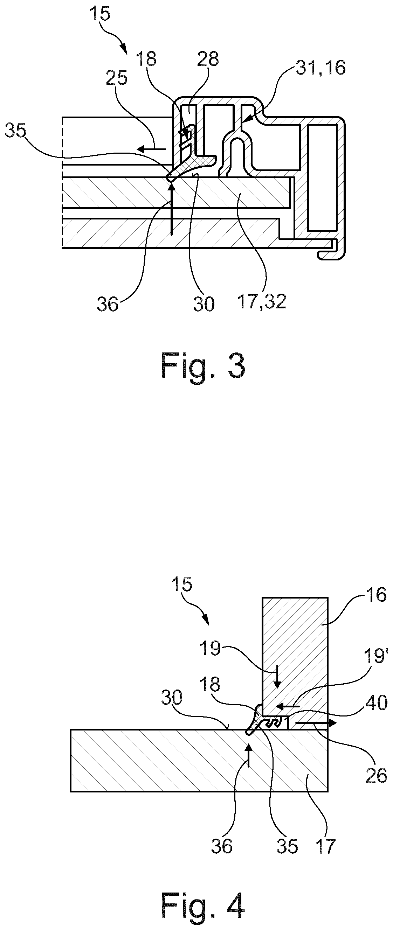

Fig. 2 zeigt eine schematische, geschnittene Prinzipdarstellung einer Abdichtung 15 für das in Fig. 1 gezeigte Freizeitfahrzeug 1 entsprechend einer möglichen Ausgestaltung. In dieser Ausgestaltung sind ein erstes Element 16 und ein zweites Element 17 sowie ein dazwischen angeordnetes Dichtprofil 18 dargestellt. Die Elemente 16, 17 können durch ein Paar von benachbarten, insbesondere winklig aufeinander stoßenden Seitenwänden 6 bis 11 der Nasszelle 2 gegeben sein, wie es auch anhand Fig. 4 erläutert ist. Ferner kann das erste Element 16 als Rahmenelement 31 ausgebildet sein, während das zweite Element 17 als Flächenfüllung 17 ausgebildet ist, wie es auch anhand Fig. 3 erläutert ist.

Die in Fig. 2 im Prinzip dargestellte Abdichtung 15 ist zwischen dem ersten Element 16 und dem zweiten Element 17 vorgesehen. Je nach Ausgestaltung kann die Abdichtung 15 insbesondere als Eckverbindung 15, wie es exemplarisch in Fig. 4 dargestellt ist, oder als Rahmenverbindung 15, wie es exemplarisch in Fig. 3 dargestellt ist, ausgebildet sein. Die Abdichtung 15 dient hierbei für eine Einrichtung 2, 3 des Freizeitfahrzeugs 1. Besonders bevorzugt dient die Abdichtung 15 für eine Nasszelle 2 oder eine Dusche 3 des Freizeitfahrzeugs 1.

Die Abdichtung 15 weist ein elastisches Dichtprofil 18 auf, das zwischen dem ersten Element 16 und dem zweiten Element 17 angeordnet ist. Das elastische Dichtprofil 18 ist zumindest teilweise durch Einklemmen des elastischen Dichtprofils 18 zwischen dem ersten Element 16 und dem zweiten Element 17 in seiner Position gehalten. Bei einer bevorzugten Ausgestaltung ist das elastische Dichtprofil 18 zumindest im Wesentlichen durch Einklemmen des elastischen Dichtprofils 18 zwischen dem ersten Element 16 und dem zweiten Element 17 in seiner Position gehalten. Somit kann das Dichtelement durch seine geometrische Ausgestaltung lediglich durch Einklemmen auf Position gehalten werden.

In dieser Ausgestaltung greift das erste Element 16 mit einer bauchförmigen Auswölbung 22 teilweise in eine Ausnehmung 27 des Dichtprofils 18 ein. Dadurch ist zwischen dem elastischen Dichtprofil 18 und dem ersten Element 16 ein gewisser Formschluss entlang der Richtung 25, also in und entgegen der Richtung 25, gebildet. Im montierten Zustand ist das erste Element 16 in einer Richtung 19 beaufschlagt. Ferner ist das zweite Element entgegen der Richtung 19 abgestützt, wie es durch Pfeile 20, 21 veranschaulicht ist.

Fig. 3 zeigt eine mögliche Ausgestaltung einer Abdichtung 15 für das in Fig. 1 gezeigte Freizeitfahrzeug 1. Bei dieser Ausgestaltung ist das erste Element 16 als Rahmenelement 31 ausgebildet ist, während das zweite Element 17 eine Flächenfüllung 32 ist. Das Dichtprofil 18 ist teilweise in die Aufnahme 28 des Rahmenelements 31 eingesetzt. Bei dieser Ausgestaltung ist zwischen dem elastischen Dichtprofil 18 und dem Rahmenelement 16 ein Formschluss entlang der Richtung 25 gebildet.

Das zweite Element 17 weist im Bereich des Dichtprofis 18 eine Anlagefläche 30 auf, an der der Dichtprofil 18 anliegt. Dadurch ist eine zuverlässige Abdichtung 15 gegeben. Die Anlagefläche 30 des zweiten Elements 17 ist vorzugsweise eine glatte Anlagefläche 30 und vorzugsweise eben oder zumindest mit einer geringen Krümmung ausgestaltet.

Das Dichtprofil 18 weist in dieser Ausgestaltung eine Dichtlippe 35 auf, die an der Anlagefläche 30 des zweiten Elements 17 anliegt. Die Dichtlippe 35 ist durch das Einklemmen des Dichtprofis 18 zwischen das erste Element 16 und das zweite Element 17 elastisch verformt. In Fig. 3 und Fig. 4 ist dies dadurch verdeutlicht, dass die Dichtlippe 35 des Dichtprofils 18 im unverformten Zustand dargestellt ist. Durch Anlegen des zweiten Elements 17 an das Dichtprofil 18 wird die Dichtlippe 35 dann in der Richtung 36 verformt.

Fig. 4 zeigt eine mögliche Ausgestaltung einer Abdichtung 15 für das in Fig. 1 gezeigte Freizeitfahrzeug 1, wobei die Elemente 16, 17 als Wandelemente 6 bis 11 ausgebildet sind. Bevorzugt sind die Elemente 16, 17 als Wände 6 bis 11, insbesondere als Seitenwände 6 bis 11, der Nasszelle 2 ausgebildet.

Das Dichtprofil 18 ist teilweise in eine Ausnehmung 40 des ersten Elements 16 eingesetzt. Durch die Ausnehmung 40 ist eine Kante 41 an dem ersten Element 16 gebildet. An die Kante 41 ist das Dichtelement 18 angesetzt. Dadurch sind Abstützungen für das Dichtelement 18 an dem ersten Element 16 in den Richtungen 19, 19' gegeben.

Die Erfindung ist nicht auf das beschriebene Ausführungsbeispiel beschränkt.

## Patentansprüche

1. Abdichtung (15), insbesondere Eck- oder Rahmenverbindung (15), für eine Einrichtung (2, 3), insbesondere eine Nasszelle (2) oder eine Dusche (3), eines Freizeitfahrzeugs (1), insbesondere eines Wohnmobils oder eines Wohnwagens, zwischen einem ersten Element (16) der Einrichtung (2, 3) und einem zweiten Element (17) der Einrichtung (2, 3),
**dadurch gekennzeichnet,**
**dass** zumindest ein elastisches Dichtprofil (18) vorgesehen ist, das zwischen dem ersten Element (16) und dem zweiten Element (17) angeordnet ist, und dass das elastische Dichtprofil (18) zumindest teilweise, insbesondere zumindest im Wesentlichen, durch Einklemmen des elastischen Dichtprofils (18) zwischen dem ersten Element (16) und dem zweiten Element (17) in seiner Position gehalten ist.

2. Abdichtung nach Anspruch 1,
**dadurch gekennzeichnet,**
**dass** zwischen dem elastischen Dichtprofil (18) und dem ersten Element (16) ein Formschluss in zumindest einer Richtung (25) gebildet ist.

3. Abdichtung nach Anspruch 1 oder 2,
**dadurch gekennzeichnet,**
**dass** das elastische Dichtprofil (18) teilweise in eine Aufnahme (28) des ersten Elements (16) eingesetzt ist und/oder dass das erste Element (16) teilweise in zumindest eine Ausnehmung (27) des Dichtprofils (18) eingreift.

4. Abdichtung nach einem der Ansprüche 1 bis 3,
**dadurch gekennzeichnet,**
**dass** das zweite Element (17) zumindest im Bereich des Dichtprofis (18) eine Anlagefläche (30) aufweist, an der das Dichtprofil (18) anliegt.

5. Abdichtung nach Anspruch 4,
**dadurch gekennzeichnet,**
**dass** dass die Anlagefläche (30) des zweiten Elements (17) eine zumindest im Wesentlichen glatte Anlagefläche (30) ist und/oder dass die Anlagefläche (30) des zweiten Elements (17) eine zumindest im Wesentlichen ebene Anlagefläche (30) ist.

6. Abdichtung nach einem der Ansprüche 1 bis 5,
**dadurch gekennzeichnet,**
**dass** das erste Element (16) ein Rahmenelement (31) ist oder dass das erste Element (16) ein Wandelement (6 - 11), insbesondere eine Wand (6 - 11), weiter insbesondere eine Seitenwand (6 - 11), der Einrichtung (2, 3) ist.

7. Abdichtung nach einem der Ansprüche 1 bis 6,
**dadurch gekennzeichnet,**
**dass** das zweite Element (17) eine Flächenfüllung (32) ist oder dass das zweite Element (17) ein Wandelement (6 - 11), insbesondere eine Wand (6 - 11), weiter insbesondere eine Seitenwand (6 - 11), der Einrichtung (2, 3) ist.

8. Abdichtung nach einem der Ansprüche 1 bis 7,
**dadurch gekennzeichnet,**
**dass** das Dichtprofil (18) zumindest eine Dichtlippe (35) aufweist, die an dem zweiten Element (17) anliegt, und dass die Dichtlippe (35) durch das Einklemmen des Dichtprofis (18) zwischen das erste Element (16) und das zweite Element (17) elastisch verformt ist.

9. Einrichtung (2, 3), insbesondere Nasszelle (2) oder Dusche (3), für ein Freizeitfahrzeug (1), insbesondere für ein Wohnmobil oder einen Wohnwagen, mit zumindest einer Abdichtung (15) nach einem der Ansprüche 1 bis 8, die zwischen einem ersten Element (16) der Einrichtung (2, 3) und einem zweiten Element (17) der Einrichtung (2, 3) vorgesehen ist.

10. Freizeitfahrzeug (1), insbesondere Wohnmobil oder Wohnwagen, mit zumindest einer Einrichtung (2, 3), insbesondere einer Nasszelle (2) oder Dusche (3), die ein erstes Element (16) und zumindest eine zweites Element (17) aufweist, wobei zumindest eine Abdichtung (15) zwischen dem ersten Element (16) und dem zweiten Element (17) vorgesehen ist, die nach einem der Ansprüche 1 bis 8 ausgebildet ist.
